(19) **Europäisches Patentamt**
**European Patent Office**
**Office européen des brevets**

(11) **EP 3 127 203 B1**

(12) **FASCICULE DE BREVET EUROPEEN**

(45) Date de publication et mention de la délivrance du brevet:
**14.02.2018 Bulletin 2018/07**

(21) Numéro de dépôt: **15718522.4**

(22) Date de dépôt: **24.03.2015**

(51) Int Cl.:
*H02G 13/00* *(2006.01)*

(86) Numéro de dépôt international:
**PCT/FR2015/050731**

(87) Numéro de publication internationale:
**WO 2015/150663 (08.10.2015 Gazette 2015/40)**

(54) **PROCÉDÉ ET DISPOSITIF DE PROTECTION CONTRE LA FOUDRE METTANT EN OEUVRE UN PARATONNERE AVEC MOYENS D'AMORÇAGE ET MOYENS DE NEUTRALISATION DE LA CHARGE D'ESPACE**

VERFAHREN UND VORRICHTUNG FÜR BLITZSCHUTZ MIT EINEM BLITZABLEITER MIT ZÜNDVORRICHTUNG UND VORRICHTUNG ZUR NEUTRALISIERUNG DER RAUMLADUNG

METHOD AND DEVICE FOR LIGHTING PROTECTION IMPLEMENTING A LIGHTNING ROD WITH PRIMING MEANS AND MEANS FOR NEUTRALISING THE SPACE CHARGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.04.2014 FR 1452899**

(43) Date de publication de la demande:
**08.02.2017 Bulletin 2017/06**

(73) Titulaire: **Indelec**
**59500 Douai (FR)**

(72) Inventeurs:
• **THIRION, Franck**
**59310 Orchies (FR)**

• **THIRION, Bernard**
**59700 Marcq en Baroeul (FR)**
• **FAUVEAUX, Sylvain**
**59500 Douai (FR)**

(74) Mandataire: **Matkowska, Franck**
**Matkowska & Associés**
**9, rue Jacques Prévert**
**59650 Villeneuve d'Ascq (FR)**

(56) Documents cités:
**WO-A1-98/00898        FR-A1- 2 973 598**
**US-A1- 2009 000 802**

**Description**

**Domaine technique**

La présente invention concerne le domaine de la protection contre la foudre. Elle a pour objets principaux un procédé et un dispositif de protection contre la foudre mettant en oeuvre un paratonnerre de type PDA (paratonnerre à dispositif d'amorçage), qui comprend des moyens de neutralisation de la charge d'espace qui se forme, à l'extrémité de l'électrode collectrice du paratonnerre, avant émission d'un traceur ascendant.

**Art antérieur**

La foudre est un phénomène naturel difficilement prévisible se traduisant par une décharge électrique de haute intensité, pouvant avoir des effets destructeurs importants.

Lorsqu'un nuage d'orage se forme au-dessus d'une zone de l'écorce terrestre, il se charge en accumulant des charges électriques par des phénomènes de convexion et autres phénomènes encore mal connus. Il se produit une ségrégation des charges selon leur signe, leur altitude et la température qui varie de manière importante. La configuration rencontrée à plus de 90% dans les régions à climat tempéré aboutit à une base du nuage d'orage chargée négativement. Le sol au dessous du nuage d'orage se polarise localement avec une polarité inverse par effet de miroir au dessous de la base du nuage d'orage.

Ainsi, entre le sol et la base du nuage d'orage se forme un champ électrique dit « champ d'orage ».

Par beau temps, on peut mesurer à la surface de l'écorce terrestre et sur terrain plat un champ électrique dit « de beau temps », typiquement de l'ordre de 100 V/m à 150 V/m, dû à des charges positives situées à des altitudes de l'ordre de 50km. Lors du développement d'un processus orageux, le champ électrique « d'orage » qui se forme entre la base du nuage et le sol, présente une polarité inverse au champ électrique de beau temps et peut atteindre typiquement des valeurs moyennes de -15 kV/m à - 20 kV/m.

L'air forme un très bon isolant électrique. Ainsi, malgré cette énorme différence de potentiel entre la base du nuage d'orage et le sol, une décharge électrique correspondant à la formation de la foudre ne peut se produire. Une très forte augmentation du champ électrique local favorise le déclenchement de cette décharge électrique.

Il est par ailleurs connu que la moindre aspérité sur le sol agit comme un concentrateur des lignes équipotentielles de champ électrique et augmente localement le champ électrique. Cette augmentation locale du champ électrique est appelé « effet de pointe ». Chaque aspérité, selon sa hauteur et son degré d'effilement, sera caractérisée par son propre coefficient d'amplification du champ par effet de pointe.

Grâce à cette amplification locale du champ électrique par effet de pointe sur le sommet d'une aspérité, on peut observer une ionisation locale de l'air au voisinage du sommet d'une aspérité, si le champ électrique est supérieur, en valeur absolue, typiquement à 26 kV/cm. Chaque électron arraché par ionisation de l'air est fortement accéléré par le champ électrique local. Lorsque l'énergie de l'électron est suffisante, il peut, en entrant en collision avec un atome, arracher un autre électron, et ainsi de suite, accélérant l'ionisation de l'air au voisinage de l'aspérité par un phénomène dit « d'avalanche électronique».

En pratique, ce phénomène d'avalanche électronique se produit si le champ électrique atteint localement au moins environ 30 kV/cm. Cette ionisation de l'air par un phénomène d'avalanche électronique provoque un effet dit « couronne », encore appelé effet « *Corona* », qui peut être précurseur de l'éclair, et qui se traduit par l'émission au voisinage d'une aspérité de l'émission d'une lumière couronne. En pratique, cet effet couronne peut être observé au sommet des points les plus élevés (pylônes, bâtiments, arbres...).

Toutefois, l'augmentation locale du champ électrique par effet de pointe décroit très rapidement dans l'espace. Si le champ électrique ambiant n'est pas suffisant, cette ionisation (effet couronne) ne peut pas se propager et reste confinée autour de l'aspérité.

Le plus souvent, la formation de la foudre commence par une ou plusieurs décharges électriques descendant du nuage d'orage. Ces décharges électriques sont appelées communément traceurs descendants, ou encore « downward stepped leaders ». Un traceur descendant, lorsqu'il approche du sol, provoque une brusque augmentation du champ électrique global et donc du champ électrique local au niveau de chaque aspérité. Cette brusque augmentation du champ électrique combinée à l'effet de pointe provoque l'intensification de l'effet couronne sur les aspérités du sol les plus hautes et les plus effilées. Plus le traceur descendant s'approche du sol, et plus le champ électrique global et le champ électrique local au sommet d'une aspérité augmentent. L'effet couronne au voisinage immédiat d'une aspérité augmente alors fortement pour passer en mode pulsé et l'ionisation de l'air au voisinage immédiat de l'aspérité tend à se propager vers le haut sous la forme d'un « streamer ». Toutefois, plus on s'éloigne de l'aspérité, plus le coefficient d'amplification de l'effet de pointe diminue. A partir d'une certaine distance, les conditions de champ ne sont plus suffisantes pour porter cette ionisation (« streamer ») vers le haut. Cette limite est estimée à environ 5kV/cm. Il y a alors recombinaison des charges, l'effet couronne restant confiné au voisinage de l'aspérité, et le cycle recommence. Cependant pendant ce temps là, le champ électrique global continue à augmenter, le traceur descendant se rapprochant toujours du sol.

Au cours de l'un des cycles, un « streamer » va trouver les bonnes conditions de champ pour se propager librement vers le haut sous la forme d'un traceur ascendant allant à la rencontre du traceur descendant.

Lorsqu'un traceur ascendant rencontre un traceur descendant, un canal conducteur est établi. Ce canal conducteur permet au nuage d'orage de se décharger vers le sol en évacuant ses charges (coup de foudre) par l'arc en retour (« return stroke ») et les arcs subséquents. Une fois le nuage d'orage déchargé, son potentiel se réduit fortement, et le nuage d'orage se recharge pour le prochain coup de foudre.

Cette décharge électrique rapide de haute intensité peut être fortement destructrice, en particulier pour les installations industrielles ou domestiques. Afin de protéger une zone ou une installation au sol contre la foudre, il est usuel d'installer en hauteur au moins un paratonnerre, par exemple sur le toit d'un bâtiment à protéger, dans le but de capter la foudre et d'évacuer à la terre la décharge électrique impulsionnelle de haute intensité accompagnant la foudre. Un paratonnerre comporte typiquement, dans sa version la plus simple, au moins une électrode collectrice, sous la forme le plus souvent d'une tige métallique, placée en hauteur. Cette électrode métallique collectrice comporte une extrémité libre qui peut être très effilée en forme de pointe ou qui peut être arrondie, et est reliée électriquement à la terre, par un câble électriquement conducteur ou équivalent. Cette électrode collectrice a pour fonction de favoriser, par effet de pointe, la formation de traceurs ascendants à l'approche de traceurs descendants, de manière à augmenter la probabilité qu'un traceur descendant du nuage d'orage établisse un contact avec un traceur ascendant produit par l'électrode collectrice, plutôt qu'avec un traceur ascendant produit par une toute autre aspérité de manière non maîtrisée.

Depuis longtemps, dans le but d'améliorer l'efficacité des paratonnerres, on a proposé d'associer à l'électrode collectrice inerte d'un paratonnerre des moyens d'amorçage permettant de favoriser la formation d'un traceur ascendant en déclenchant plus rapidement la formation d'un traceur ascendant par rapport à une simple électrode collectrice inerte. D'une manière générale, ces moyens d'amorçage agissent en provoquant une ionisation additionnelle de l'air au voisinage de l'extrémité libre de l'électrode collectrice. Ces paratonnerres perfectionnés sont communément désignés PDA (Paratonnerre à dispositif d'amorçage). Des exemples de PDA sont décrits notamment dans les demandes de brevet français FR 2 543 370, FR 2 590 737, FR 2 973 598 , FR 2 943 487 et US 2009/ 000802.

Dans la demande de brevet français FR 2 543 370, l'amorçage est obtenu au moyen d'un dispositif piézo-électrique sur lequel une pression mécanique est exercée par la force du vent, mais l'apparition de ce vent à l'approche de l'orage est aléatoire et rend le paratonnerre moins fiable.

Dans la demande de brevet FR 2 590 737, l'amorçage est obtenu au moyen d'au moins une électrode additionnelle, qui est disposée au voisinage de l'extrémité libre de l'électrode collectrice, et qui est alimentée de manière qu'une décharge électrique haute tension s'établisse entre cette électrode et l'extrémité libre de l'électrode collectrice, et provoque ainsi une ionisation complémentaire de l'air au voisinage de l'extrémité libre de l'électrode collectrice.

Dans la demande de brevet français précitée FR 2 973 598, l'ionisation pour l'amorçage du paratonnerre est obtenue au moyen d'un rayonnement électromagnétique, de type laser, focalisé sur ou à proximité immédiate de l'extrémité libre de l'électrode collectrice.

Les dispositifs d'amorçage connus, et notamment ceux du type à décharges haute tension ou à rayonnement électromagnétique, peuvent être améliorés en mettant en oeuvre une synchronisation précise du déclenchement par rapport à l'évolution du champ électrique, afin de ne pas déclencher trop prématurément ou trop tardivement l'ionisation additionnelle. Des systèmes de déclenchement automatique du dispositif d'amorçage ont donc été développés. La demande de brevet français précitée FR 2 590 737 divulgue par exemple un système de déclenchement automatique basé sur une détection de la variation du champ électrique généré par l'orage. La demande de brevet français précitée FR 2 943 487 divulgue par exemple un système de déclenchement automatique basé sur une détection optique de l'effet couronne.

Comparativement à un paratonnerre mettant en oeuvre une simple électrode collectrice inerte, et encore communément désignée «tige Franklin », les paratonnerres à dispositif d'amorçage permettent avantageusement d'élargir la zone de protection (ou rayon de protection) du paratonnerre, car ils sont capables d'émettre (instant d'amorçage) un traceur ascendant en avance de temps par rapport à une simple électrode collectrice inerte. Ce traceur ascendant, porté par le champ électrique généré par l'orage a donc le temps de monter suffisamment haut à la rencontre du traceur ascendant se dirigeant vers le sol, bien avant que les autres objets (métalliques ou non) alentours ne puissent en faire de même. L'électrode collectrice du paratonnerre à dispositif d'amorçage est donc de facto le récepteur de la foudre, empêchant ainsi la foudre de tomber ailleurs dans la zone de protection définie par les performances du paratonnerre.

Quel que soit le type de paratonnerre, lorsque l'orage s'intensifie, l'effet couronne précédemment décrit se traduit par l'apparition dans l'électrode collectrice du paratonnerre d'un courant « couronne », encore appelé « courant d'effluves » ou « courant Corona », qui pendant une période initiale (lorsque l'orage est encore loin) est sensiblement d'intensité continue (régime continu du courant). Lorsque le champ électrique global devient suffisamment intense, l'effet couronne passe en régime pulsé avec des pics d'intensité de plus en importants, jusqu'à atteindre un pic de courant couronne suffisamment important pour que le « streamer » généré trouve les bonnes conditions de champ et se propage librement vers le haut sous la forme d'un traceur ascendant allant à la rencontre du traceur descendant.

Or ce courant couronne généré dans l'électrode collectrice, en régime continu, puis en régime pulsé, s'accompagne de la formation, dans l'air et à proximité de l'extrémité libre de l'électrode collectrice, d'une charge d'espace, qui a une polarité opposée à celle de la base du nuage d'orage, et qui se développe dans le temps à proximité de l'extrémité libre de l'électrode collectrice sous la forme d'un matelas de charges électriques de polarité opposée à celle de la base du nuage d'orage, ou autrement dit de polarité opposée au champ électrique ambiant. La plupart du temps, cette charge d'espace à proximité de l'extrémité libre de l'électrode collectrice commence à se former pendant le régime continu du courant couronne, et se développe, sous la forme d'un matelas de charges électriques plus ou moins épais, pendant le régime continu du courant couronne et pendant le régime pulsé du courant couronne. Suivant le niveau de champ électrique ambiant d'orage, plus ou moins amplifié localement par effet pointe par l'électrode collectrice, cette charge d'espace forme un matelas de charges électriques plus ou moins épais.

Or le développement de cette charge d'espace sous la forme d'un matelas de charges électrique de polarité opposée à celle de la base du nuage d'orage réduit localement le champ électrique à proximité de l'extrémité libre de l'électrode collectrice, et aboutit par effet de blindage électrostatique à masquer l'extrémité libre de l'électrode collectrice pour le traceur descendant, et réciproquement. Il en résulte que la formation du traceur ascendant est indûment retardée par cette charge d'espace, ce qui réduit de manière préjudiciable le rayon de protection du paratonnerre et détériore les performances du paratonnerre.

Pour essayer de pallier ce problème de retard à l'amorçage lié au développement d'une charge d'espace au voisinage de l'extrémité libre de l'électrode collectrice d'un paratonnerre, on a proposé dans la demande de brevet FR 2 817 085 une solution consistant à limiter le courant couronne dans une électrode collectrice inerte d'un paratonnerre, afin de limiter la formation d'une charge d'espace à proximité de l'extrémité libre de l'électrode collectrice, avant la formation du traceur ascendant. En particulier, le dispositif décrit dans cette publication met en oeuvre un circuit de limitation et de contrôle du courant couronne, qui comprend des moyens de décharge ayant pour fonction, d'une manière générale, de limiter le courant couronne en l'accumulant dans un condensateur et en déchargeant périodiquement le condensateur dans un éclateur principal, tant que le champ électrique ambiant est inférieur à un seuil prédéterminé. La mise en oeuvre, dans ce circuit de limitation et de contrôle du courant couronne, d'une bobine, en série avec le condensateur, permet notamment d'inverser, pendant un très court instant, le potentiel de l'extrémité libre de l'électrode collectrice, et ainsi de limiter périodiquement le développement d'une charge d'espace à proximité de l'extrémité libre de l'électrode collectrice.

Cette solution permet certes de réduire les effets de masquage de l'extrémité libre de l'électrode collectrice, mais un inconvénient de cette solution est que le fonctionnement du circuit de limitation et de contrôle du courant couronne est indépendant de la formation du traceur ascendant. Il en résulte que la formation du traceur ascendant se produit la plupart du temps pendant le cycle de charge du condensateur, c'est-à-dire alors qu'une charge d'espace plus ou moins importante a commencé à se développer à proximité de l'extrémité libre de l'électrode collectrice, ce qui se traduit par un retard dans la formation du traceur ascendant, qui n'est pas contrôlé et qui peut être préjudiciable.

### Objectif de l'invention

Un objectif général de l'invention est de proposer un nouveau dispositif et un nouveau procédé de protection contre la foudre, qui permettent de pallier le problème susvisé de retard à l'amorçage d'un traceur ascendant lié au développement d'une charge d'espace à proximité de l'extrémité libre d'une électrode collectrice, avant l'émission d'un traceur ascendant, et qui permettent ainsi d'améliorer les performances de la protection contre la foudre.

Plus particulièrement, un objectif plus particulier de l'invention est d'améliorer l'écart-type des instants d'amorçage d'un paratonnerre à dispositif d'amorçage (PDA).

### Résumé de l'invention

Selon un premier aspect, l'invention a ainsi pour premier objet un dispositif de protection contre la foudre, qui est connu en ce qu'il comprend une électrode collectrice avec au moins une extrémité libre, configurée pour capter un courant de foudre et pour le décharger dans la terre, et des moyens d'amorçage permettant de favoriser la formation d'un traceur ascendant au voisinage de l'extrémité libre de l'électrode collectrice.

De manière caractéristique selon l'invention, le dispositif de protection contre la foudre comporte en outre des moyens de neutralisation, qui permettent de réduire la charge d'espace qui s'est formée au voisinage de l'extrémité libre de l'électrode collectrice avant l'émission d'un traceur ascendant, et des moyens électroniques de commande, qui permettent de commander automatiquement et séquentiellement dans un premier temps lesdits moyens de neutralisation, et dans un deuxième temps lesdits moyens d'amorçage du paratonnerre.

Selon un deuxième aspect, le dispositif de protection contre la foudre comporte un paratonnerre, qui comprend une électrode collectrice avec au moins une extrémité libre, configurée pour capter un courant de foudre et pour le décharger dans la terre, et des moyens d'amorçage permettant de favoriser la formation d'un traceur ascendant au voisinage de l'extrémité libre de l'électrode collectrice.

De manière caractéristique selon l'invention, le dispositif comporte en outre des moyens de neutralisation, qui permettent d'appliquer temporairement sur l'électrode collectrice, ou le cas échéant sur chaque électrode de neutralisation, une tension de neutralisation avant l'émission d'un traceur ascendant, et des moyens électroniques de commande qui permettent de commander automatiquement et séquentiellement dans un premier temps lesdits moyens de neutralisation, et dans un deuxième temps lesdits moyens d'amorçage du paratonnerre.

Selon un troisième aspect, le dispositif de protection contre la foudre comporte un paratonnerre, qui comprend une électrode collectrice avec au moins une extrémité libre, configurée pour capter un courant de foudre et pour le décharger dans la terre, et des moyens d'amorçage permettant de favoriser la formation d'un traceur ascendant au voisinage de l'extrémité libre de l'électrode collectrice.

De manière caractéristique selon l'invention, le dispositif comporte en outre des moyens de neutralisation qui permettent d'appliquer temporairement sur l'électrode collectrice, ou le cas échéant sur chaque électrode de neutralisation, avant l'émission d'un traceur ascendant, une tension de neutralisation permettant d'augmenter l'intensité du courant couronne traversant l'électrode collectrice, et des moyens électroniques de commande qui permettent de commander automatiquement et séquentiellement dans un premier temps lesdits moyens de neutralisation, et dans un deuxième temps lesdits moyens d'amorçage du paratonnerre.

Selon un quatrième aspect, le dispositif de protection contre la foudre comporte un paratonnerre, qui comprend une électrode collectrice avec au moins une extrémité libre, configurée pour capter un courant de foudre et pour le décharger dans la terre, et des moyens d'amorçage permettant de favoriser la formation d'un traceur ascendant au voisinage de l'extrémité libre de l'électrode collectrice.

De manière caractéristique selon l'invention, le dispositif comporte en outre des moyens de neutralisation qui permettent d'appliquer temporairement sur l'électrode collectrice, ou le cas échéant sur chaque électrode de neutralisation, une tension de neutralisation avant l'émission d'un traceur ascendant, et des moyens électroniques de commande qui permettent de commander automatiquement et séquentiellement dans un premier temps lesdits moyens de neutralisation, et dans un deuxième temps lesdits moyens d'amorçage du paratonnerre, de telle sorte que l'écart-type des instants d'amorçage (TB) du dispositif est inférieur à l'écart-type des instants d'amorçage (TB) du dispositif sans mise en oeuvre des moyens de neutralisation.

Plus particulièrement, selon le premier, deuxième, troisième ou quatrième aspect susvisé, le dispositif de l'invention peut comporter les caractéristiques additionnelles et facultatives ci-après, prises isolément ou en combinaison les unes avec les autres :

- les moyens de neutralisation comportent au moins une électrode de neutralisation qui est positionnée à proximité de l'extrémité libre de l'électrode collectrice.
- les moyens de neutralisation permettent d'appliquer temporairement sur l'électrode collectrice, ou le cas échéant sur chaque électrode de neutralisation, une tension de neutralisation de polarité identique à la polarité du champ électrique ambiant.

- les moyens de neutralisation permettent d'appliquer temporairement sur l'électrode collectrice, ou le cas échéant sur chaque électrode de neutralisation, une tension de neutralisation de polarité opposée à la polarité du champ électrique ambiant.
- la tension de neutralisation est une impulsion de tension.
- les moyens d'amorçage permettent l'ionisation de l'air à proximité de l'extrémité libre de l'électrode collectrice.
- les moyens d'amorçage permettent l'ionisation, par des décharges haute tension, de l'air à proximité de l'extrémité libre de l'électrode collectrice.
- les moyens d'amorçage comportent au moins une électrode d'étincelage positionnée à proximité de l'extrémité libre de l'électrode collectrice.
- les moyens d'amorçage permettent d'appliquer temporairement sur chaque électrode d'étincelage une tension d'ionisation.
- le dispositif comporte des moyens de détection du champ électrique ambiant au voisinage du paratonnerre, et les moyens de commande sont conçus pour commander automatiquement lesdits moyens de neutralisation, et lesdits moyens d'amorçage en fonction du champ électrique ambiant détecté par les moyens de détection.
- les moyens de commande sont conçus pour commander automatiquement lesdits moyens de neutralisation, et lesdits moyens d'amorçage en fonction de la valeur (E) du champ électrique ambiant détecté par les moyens de détection et/ou de la variation (dE/dt) du champ électrique ambiant détecté par les moyens de détection.
- les moyens électroniques de commande sont conçus pour commander automatiquement lesdits moyens de neutralisation lorsque la valeur (E) ou la variation (dE/dt) du champ électrique ambiant détecté par des moyens de détection est supérieure à un premier seuil critique (Sc1) prédéfini, et de préférence paramétrable.

- les moyens électroniques de commande sont conçus pour commander automatiquement lesdits moyens d'amorçage lorsque la valeur (E) ou la variation (dE/dt) du champ électrique ambiant détecté par des moyens de détection est supérieure à un deuxième seuil critique (Sc2) prédéfini, et de préférence paramétrable, ledit deuxième seuil critique (Sc2) étant supérieur au premier seuil critique (Sc1).
- les moyens électroniques de commande sont conçus pour commander automatiquement lesdits moyens de neutralisation, au moyen d'un premier signal de commande et pour commander automatiquement lesdits moyens d'amorçage au moyen d'un deuxième signal de commande, qui est retardé par rapport premier signal de commande d'une durée (R) prédéfinie et de préférence paramétrable.
- la durée (R) du retard est inférieure à 1 ms.
- le dispositif comporte des moyens de détection d'une charge d'espace à proximité de l'extrémité libre de l'électrode collectrice.
- les moyens de détection d'une charge d'espace à proximité de l'extrémité libre de l'électrode collectrice comportent un capteur détectant le courant couronne traversant l'électrode collectrice ou un capteur mesurant le champ électrique ambiant.
- les moyens électroniques de commande comportent des moyens d'autorisation autorisant ou non la commande des moyens de neutralisation par les moyens électroniques de commande, à partir d'une détection d'une charge d'espace à proximité de l'extrémité libre de l'électrode collectrice.
- la tension de neutralisation permet d'augmenter l'intensité du courant couronne traversant l'électrode collectrice.
- les moyens électroniques de commande permettent de commander automatiquement et séquentiellement dans un premier temps lesdits moyens de neutralisation, et dans un deuxième temps lesdits moyens d'amorçage du paratonnerre, de telle sorte que l'écart-type des instants d'amorçage (TB) du dispositif est inférieur à l'écart-type des instants d'amorçage (TB) du dispositif sans mise en oeuvre des moyens de neutralisation.

L'invention a également pour objet un procédé de protection contre la foudre, au moyen d'un dispositif comportant un paratonnerre, qui comprend une électrode collectrice avec au moins une extrémité libre, configurée pour capter un courant de foudre et pour le décharger dans la terre.

De manière caractéristique selon l'invention, à l'approche d'un traceur descendant, dans une première phase de neutralisation, on applique temporairement, sur l'électrode collectrice ou sur au moins une électrode de neutralisation positionnée à proximité de l'extrémité libre de l'électrode collectrice, une tension de neutralisation, et dans une deuxième phase d'amorçage d'un traceur ascendant mise en oeuvre après la première phase de neutralisation, et de préférence immédiatement après la première phase de neutralisation, on provoque une ionisation de l'air à proximité de l'extrémité libre de l'électrode collectrice.

Plus particulièrement, le procédé de l'invention peut comporter les caractéristiques additionnelles et facultatives ci-après, prises isolément ou en combinaison les unes avec les autres :

- la polarité de la tension de neutralisation est opposée à la polarité de la charge d'espace qui s'est formée dans l'air à proximité de l'extrémité libre de l'électrode collectrice.
- la polarité de la tension de neutralisation est identique à la polarité de la charge d'espace qui s'est formée dans l'air à proximité de l'extrémité libre de l'électrode collectrice.
- la tension de neutralisation est appliquée sous la forme d'une impulsion de tension.
- l'ionisation de l'air à proximité de l'extrémité libre de l'électrode collectrice qui est provoquée au cours de la deuxième phase d'amorçage est réalisée au moyen de décharges haute tension.
- l'ionisation de l'air à proximité de l'extrémité libre de l'électrode collectrice au cours de la deuxième phase d'amorçage est réalisée en appliquant temporairement une tension d'ionisation sur au moins une électrode d'étincelage positionnée à proximité de l'extrémité libre de l'électrode collectrice.
- on détecte le champ électrique ambiant au voisinage du paratonnerre, et on démarre la première phase de neutralisation en fonction de cette détection du champ électrique ambiant.
- la tension de neutralisation permet de réduire la charge d'espace qui s'est formée dans l'air à proximité de l'extrémité libre de l'électrode collectrice.
- la tension de neutralisation permet d'augmenter l'intensité du courant couronne traversant l'électrode collectrice.
- la mise en oeuvre successivement de ladite première phase de neutralisation et de ladite deuxième phase d'amorçage permet de diminuer l'écart-type des instants d'amorçage (TB) comparativement à un procédé mettant en oeuvre uniquement ladite deuxième phase d'amorçage.

**Brève description des dessins**

D'autres caractéristiques et avantages de l'invention apparaîtront plus clairement à la lecture de la description détaillée ci-après de plusieurs variantes de réalisation de l'invention, lesquelles variantes sont décrites à titre d'exemples non limitatifs et non exhaustifs de l'invention et en référence aux dessins annexés sur lesquels :

- La figure 1 est une vue de côté d'une première variante de dispositif de protection contre la foudre.
- La figure 2 est une vue de côté d'une deuxième variante de dispositif de protection contre la foudre.
- La figure 3 est un schéma bloc représentant l'architecture électronique d'une première variante de réalisation d'un circuit électronique de commande conforme à l'invention.
- La figure 4 est un schéma d'un montage expérimental permettant de tester en laboratoire les performances d'un paratonnerre à dispositif d'amorçage (PDA).
- La figure 5 représente un exemple de nuage de points des temps d'amorçage ($T_B$) mesurés consécutivement pour un même paratonnerre durant un même test en laboratoire.
- La figure 6 représente deux exemples de nuage de points des temps d'amorçage ($T_B$) pour deux paratonnerres à dispositif d'amorçage (PDA) différents.
- Les figures 7 à 12 sont des schémas blocs représentant respectivement l'architecture électronique de six autres variantes de réalisation d'un circuit électronique de commande conformes à l'invention.

## Description détaillée

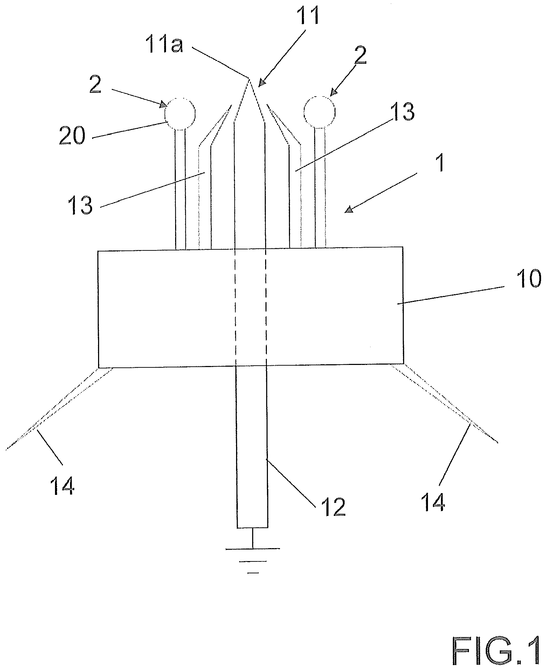

En référence à la figure 1, dans une variante de réalisation de l'invention le dispositif de protection contre la foudre comporte un paratonnerre 1 de type PDA, connu en soi et similaire à celui décrit par exemple dans la demande de brevet français FR 2 590 737, sur lequel sont fixées deux électrodes de neutralisation 2.

Ce dispositif de protection est de préférence installé en hauteur, par exemple en étant fixé sur le toit d'un bâtiment à protéger ou en étant porté par un mât.

Le paratonnerre 1 comporte un carénage de protection 10, sur lequel est fixée une tige 11 électriquement conductrice, et par exemple en cuivre, qui se termine en forme de pointe 11a à son extrémité libre, et qui peut être reliée à la terre par une connexion 12. Cette tige 11 forme ainsi une électrode collectrice configurée pour capter un courant de foudre par son extrémité libre 11a et pour décharger dans la terre le courant de foudre capté. La géométrie de l'extrémité libre 11a de l'électrode 11 est indifférente pour l'invention, et peut indifféremment être cylindrique, tronconique, pyramidale,...

Le carénage de protection 10 sert de logement à un circuit électronique de commande décrit ultérieurement. Il est de préférence en métal inoxydable, parfaitement étanche aux intempéries, avec éventuellement un traitement de surface tel qu'un nickelage, et constitue une excellente protection, du type cage de Faraday, pour les composants électroniques du circuit électronique de commande du paratonnerre. Le carénage de protection 10 peut également être en matière plastique ou en matériau composite.

Le paratonnerre 1 est équipé de moyens d'amorçage comprenant, dans cet exemple particulier, quatre électrodes d'étincelage supérieures 13, qui sont fixées sur le carénage 10 du paratonnerre, et qui sont disposées autour et à proximité de la pointe 11a de l'électrode collectrice 11.

Dans la variante particulière de la figure 1, le paratonnerre comporte également quatre électrodes inférieures 14 faisant office de prises de potentiel. Ces quatre électrodes inférieures 14 sont fixées sur le carénage 10 du paratonnerre. De manière connue en soi, ces électrodes inférieures 14 ont d'une part pour fonction de permettre une auto-alimentation du circuit électronique de commande du dispositif de protection, à partir du champ électrique ambiant, et font d'autre part office d'électrodes de mesure du champ électrique ambiant.

Dans une autre variante de réalisation, le paratonnerre peut comporter une ou plusieurs électrodes ayant uniquement pour fonction de permettre une auto-alimentation électrique du dispositif de protection, à partir du champ électrique ambiant, et une ou plusieurs électrodes différentes dédiées à la mesure du champ électrique ambiant pour la détection du ou des seuils critiques décrits ultérieurement.

Les électrodes de neutralisation 2 sont également fixées sur le carénage 10, en étant positionnées à proximité de la pointe 11a de l'électrode collectrice 11.

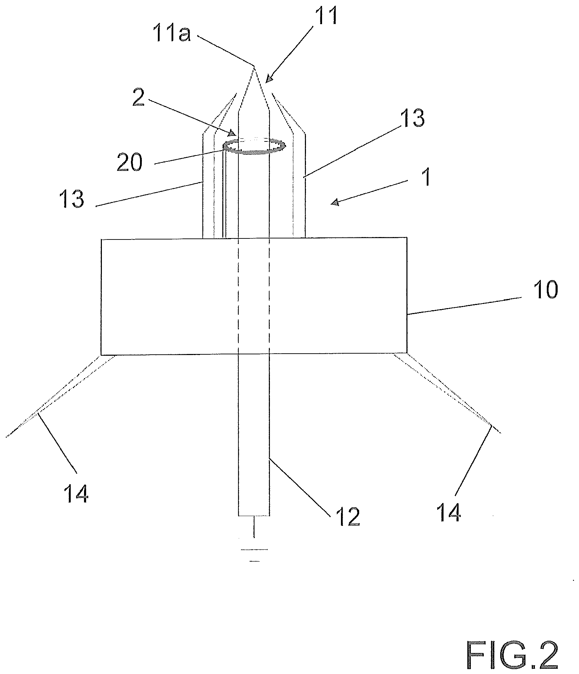

Dans l'exemple particulier illustré, chaque électrode 2 se termine à son extrémité libre par une sphère 20 métallique de relativement faible diamètre (par exemple de l'ordre de 10mm) positionnée à proximité de l'extrémité libre 11a de l'électrode collectrice 11. La forme sphérique des électrodes de neutralisation 2 n'est pas limitative de l'invention. De manière non limitative et non exhaustive, l'invention peut par exemple être mise en oeuvre au moyen d'une électrode de neutralisation entourant l'électrode collectrice 11, telle que par exemple une électrode de neutralisation en forme de cylindre ou se terminant par un tore ou un anneau (figure 2), et entourant l'extrémité libre de l'électrode collectrice 11.

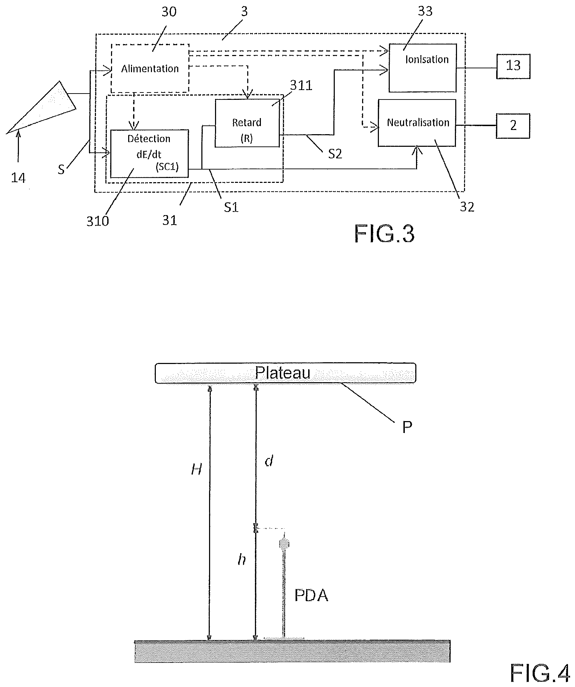

Un premier exemple de synoptique du circuit électronique de commande du dispositif de protection va à présent être décrit en référence à la figure 3.

Dans cette première variante, le circuit électronique de commande 3 du dispositif de protection comporte :

- un module d'alimentation électrique 30, autoalimenté par le champ électrique ambiant à partir des prises de potentiels dans ce champ au moyen des électrodes 14 susvisées ;
- un module électronique de commande 31 ;
- un module électronique de neutralisation 32 ;
- un module électronique d'ionisation 33 ;

Le module électronique de commande 31 comporte :

- un module électronique 310, qui permet, à partir des signaux S délivrés par les électrodes 14 susvisées, de mesurer la variation dE/dt du champ électrique ambiant, et de générer un premier signal de commande S1 en fonction de cette variation dE/dt du champ électrique ambiant et d'un seuil critique Sc1 prédéfini et de préférence paramétrable,
- un module électronique 311 qui permet, à partir du premier signal de commande S1, de générer un deuxième signal de commande S2, qui est décalé temporellement, par rapport au premier signal de commande S1, d'un retard R prédéfini, et de préférence paramétrable.

Le module électronique de neutralisation 32 est commandé par le premier signal commande S1. Le module électronique d'ionisation 33 est commandé par le deuxième signal commande S2.

En fonctionnement, lorsqu'un nuage d'orage s'intensifie, le champ électrique ambiant augmente, et il se crée dans l'électrode collectrice 11 un courant de décharge, dit courant couronne ou courant d'effluves, qui pendant une phase initiale est sensiblement continu, et qui dans une seconde phase est un courant pulsé dont les pics d'intensité successifs augmentent au fur et à mesure que le champ électrique ambiant augmente (approche d'un traceur descendant). La fréquence de ces pics de courant augmente également.

Ce courant couronne provoque la formation et le développement, dans l'air et à proximité de l'extrémité libre 11a de l'électrode collectrice 11, d'une charge d'espace, sous la forme d'un matelas de charges dont la polarité est opposée à celle du champ électrique ambiant. En d'autres termes, la charge d'espace qui se développe dans l'air à l'extrémité de l'électrode collectrice 11 est formée de charges électriques de polarité opposée à celle de la base du nuage d'orage à l'origine du champ électrique ambiant. Ainsi, lorsque la polarité de la base du nuage d'orage à l'origine du champ électrique ambiant est positive, la charge d'espace est formée de charges électriques négatives, et inversement lorsque la polarité de la base du nuage d'orage à l'origine du champ électrique ambiant est négative, la charge d'espace est formée de charges électriques positives. Cette charge d'espace augmente dans le temps (augmentation dans le temps de l'épaisseur du matelas de charges électriques constituant la charge d'espace). Cette charge d'espace réduit localement le champ électrique à proximité de l'extrémité libre de l'électrode collectrice, et de ce fait masque partiellement cette extrémité libre 11a de l'électrode collectrice 11 au traceur descendant, et réciproquement, par effet de blindage électrostatique.

Lorsque la variation de champ électrique (dE/dt) détectée par le module électronique 310 devient supérieure au seul critique Sc1, le module électronique 310 commande dans un premier temps le circuit de neutralisation au moyen du signal de commande S1, de telle sorte que le module électronique de neutralisation 32 applique temporairement, sur les électrodes de neutralisation 2 une tension de neutralisation. Plus particulièrement, à partir des signaux de détection S délivrés par les électrodes 14, le module électronique 310 détecte automatiquement, et de manière connue en soi, la polarité du champ électrique ambiant mesuré par les électrodes 14, et applique temporairement, sur les électrodes de neutralisation 2, une tension de neutralisation dont la polarité est identique à celle du champ électrique ambiant mesuré par les électrodes 14. En d'autres termes cette tension de neutralisation est négative lorsque la polarité de la base du nuage d'orage à l'origine du champ électrique ambiant est négative (statistiquement plus de 90% des cas), ou est positive lorsque la polarité de la base du nuage d'orage est positive.

L'application de cette tension de neutralisation a pour effet de neutraliser au moins partiellement, et de préférence dans son intégralité, la charge d'espace qui s'est formée dans l'air à proximité de l'extrémité libre 11a de l'électrode collectrice 11 et qui est de polarité opposée à cette tension de neutralisation. On réduit ainsi la charge d'espace qui s'est formée dans l'air à proximité de l'extrémité libre 11a de l'électrode collectrice 11, et on diminue ainsi l'effet de masquage susvisé, et de préférence lorsque la charge d'espace est totalement neutralisée, on supprime cet effet de masquage.

Plus particulièrement, cette tension de neutralisation est appliquée sous la forme d'une impulsion de tension prédéfinie de courte durée. Cette impulsion de tension a, en valeur absolue, une valeur maximale inférieure à la valeur de tension permettant la création d'un arc électrique entre une électrode de neutralisation 20 et l'extrémité libre 11a de l'électrode collectrice 11.

Dans un deuxième temps, du fait du retard R susvisé, le module électronique 311 commande le circuit d'ionisation 33 au moyen du deuxième signal de commande S2 retardé, de telle sorte que le module électronique d'ionisation 33 applique temporairement, sur les électrodes d'étincelage 13, une tension d'ionisation qui est suffisante pour que des décharges électriques haute tension s'établissent entre ces électrodes d'étincelage 13 et l'extrémité libre 11a de l'électrode collectrice 11. Ces décharges électriques haute tension provoquent une ionisation complémentaire de l'air à proximité de l'extrémité libre 11a de l'électrode collectrice 11, ce qui favorise et permet la formation d'un traceur ascendant.

Cette synchronisation (découlant du retard R) entre une première phase de neutralisation des charges d'espace à proximité de l'extrémité libre 11a de l'électrode collectrice 11 suivie immédiatement d'une deuxième phase d'ionisation de l'air à proximité de l'extrémité libre 11a de l'électrode collectrice 11, permet de garantir que l'amorçage d'un traceur ascendant est déclenché lorsque la charge d'espace dans l'air à proximité de l'extrémité libre 11a de l'électrode collectrice 11 a au moins été réduite (lorsqu'une partie des charges électriques de la charge d'espace a été neutralisée par la tension de neutralisation), et dans le cas optimum a été supprimée (lorsque toutes les charges électriques de la charge d'espace ont été neutralisées par la tension de neutralisation). On améliore ainsi les performances du paratonnerre, et notamment son rayon de protection, en évitant un retard préjudiciable dans le déclenchement d'un traceur ascendant qui serait lié à la présence d'une charge d'espace trop importante, et également en améliorant (cf test comparatif ci-après) les écart-types des temps d'amorçage d'un traceur ascendant.

Dans une autre variante, le module électronique 310 peut être conçu pour mesurer la valeur instantanée (E) du champ électrique ambiant, et pour générer un premier signal de commande S1 en fonction de cette valeur instantanée du champ électrique ambiant et d'un seuil critique Sc1 prédéfini et de préférence paramétrable. Il est également possible dans une autre variante de combiner dans le module 310 une mesure de la valeur instantanée (E) du champ électrique ambiant et une mesure de la variation (dE/dt) du champ électrique ambiant, et de faire générer par ce module 310 un premier signal de commande S1 en fonction de cette valeur instantanée (E) et de cette variation dE/dt du champ électrique ambiant et de seuils critiques prédéfinis.

Dans une autre variante, pour réduire la charge d'espace qui s'est formée dans l'air à proximité de l'extrémité libre 11a de l'électrode collectrice 11, et ainsi diminuer l'effet de masquage susvisé, il est également possible d'appliquer une tension de neutralisation dont la polarité est opposée à celle du champ électrique ambiant mesuré par les électrodes 14, c'est-à-dire de polarité identique à la polarité des charges constituant cette charge d'espace. Le potentiel de cette tension de neutralisation doit être suffisamment important pour repousser électrostatiquement tout ou partie des charges constituant cette charge d'espace, ou pour modifier sa distribution spatiale, et les éloigner suffisamment de l'extrémité libre 11a de l'électrode collectrice 11 afin de diminuer l'effet de masquage susvisé.

Avant la mise en oeuvre de la tension de neutralisation, quelle que soit la polarité de cette tension de neutralisation, l'électrode collectrice 11 est parcourue par un courant couronne, qui selon le cas peut être sensiblement continu et/ou impulsionnel. Lorsque la charge d'espace augmente de manière trop importante et produit l'effet de masquage susvisé, cet effet de masquage se traduit par une diminution de l'intensité du courant couronne. Dans certains cas, cette diminution d'intensité peut même aboutir à une interruption de courant couronne dans l'électrode collectrice 11. Lorsque la tension de neutralisation, quelle que soit la polarité, est appliquée, la réduction de la charge d'espace au sommet de l'extrémité libre de l'électrode collectrice 11, et de ce fait la diminution de l'effet de masquage, se traduisent par une augmentation de l'intensité du courant couronne traversant l'électrode collectrice 11. La mesure de l'évolution du courant couronne permet par conséquent de caractériser la réduction de la charge d'espace au sommet de l'extrémité libre de l'électrode collectrice 11, et de ce fait de caractériser la diminution de l'effet de masquage. Il existe plusieurs moyens de mesurer l'image du courant couronne circulant dans l'électrode collectrice 11:

- Un ampèremètre disposant d'une sensibilité suffisante, d'un temps de réponse très rapide et d'une bande passante très large,
- Une sonde dite de « Rogowski »,
- Un intégrateur de courant à échantillonnage rapide.

Cette liste n'est toutefois pas exhaustive.

Ces mesures électriques peuvent être complétées par des mesures optiques au sommet de l'électrode collectrice 11 au moyen :

- de photodiode(s), reliée(s) ou non à des fibres optiques regardant vers le sommet de l'électrode collectrice 11,
- d'un photomultiplicateur disposant d'une longue focale ou relié à une fibre optique regardant vers le sommet de l'électrode collectrice 11.

La détection d'un rayonnement lumineux au sommet de l'électrode collectrice 11 traduit l'activité ionique de la charge d'espace, et donc l'effet couronne. Le spectre de ce rayonnement lumineux est plutôt calé vers l'ultraviolet.

Test comparatif

Avance à l''amorçage

L'avance à l'amorçage est un paramètre mesurant la capacité pour un paratonnerre à dispositif d'amorçage (PDA), d'émettre dans les mêmes conditions d'orage un traceur ascendant en avance de temps par rapport à un paratonnerre de référence, en l'occurrence à un paratonnerre à pointe simple (PTS) inerte sans dispositif d'amorçage.

Des mesures d'avance d'amorçage comparatives ont été effectuées pour:

- un PDA de l'invention : dispositif de protection contre la foudre décrit précédemment avec mise en oeuvre de la neutralisation de la charge d'espace, immédiatement suivie d'une ionisation
  et
- un PDA classique: ce même dispositif de protection, mais sans mise en oeuvre de la neutralisation de la charge d'espace, et avec uniquement une ionisation.

La foudre est un phénomène complexe à caractère aléatoire sur plusieurs de ses paramètres comme par exemple : - l'altitude de la base du nuage, - la proéminence ou non du site, - l'amplitude du champ électrique d'orage, - la charge électrique du traceur descendant, - le vent, - la composition et la densité de l'air, ... Ainsi, deux coups de foudre consécutifs ne sont jamais identiques. Ce caractère à prédominance aléatoire est aussi présent en laboratoire de tests malgré la relative maîtrise de l'environnement d'essai. C'est pour cela que la norme PDA (NFC 17-102:2011 Annexe C) exige au moins 50 impacts de foudre simulés (appelés « claquages » ou « tirs ») consécutifs dans les mêmes conditions environnementales.

Un paratonnerre à pointe simple (PTS) est aussi testé pour servir de référence temporelle, en subissant 50 tirs. Le schéma de test est donné à la figure 4.

Le paratonnerre sous test est placé sous un plateau P métallique circulaire qui simule la base du nuage. Ce plateau P est soumis à un très grand potentiel électrique continu qui crée entre le plateau et le sol un champ d'orage simulé à caractère continu (entre -20kV/m et -25kV/m). Pour simuler l'arrivée du traceur descendant, on applique une impulsion très haute tension sur le plateau à l'aide d'un générateur de Marx. Entre le plateau et le sol, le champ électrique va donc augmenter très rapidement à l'instar du traceur descendant dans la nature.

Pendant l'application de l'impulsion THT sur le plateau, il se produit un arc électrique entre le paratonnerre et ce plateau au-dessus. Cet instant est appelé *instant d'amorçage* $T_B$.

La grandeur mesurée pendant ces tirs est l'instant d'amorçage « $T_B$ ». C'est le temps défini entre l'instant « 0 » de l'envoi de l'impulsion haute tension simulant l'arrivée du traceur descendant, et l'instant où a lieu le claquage (arc électrique) sur l'électrode collectrice du paratonnerre.

Un premier test de 50 tirs sur un paratonnerre à pointe simple (PTS) est effectué.

La moyenne arithmétique de référence ($T_{B\_MOY\,(PTS)}$) des instants d'amorçage $T_{B\_PTS}$ est calculée.

Le test est ensuite effectué (50 tirs) sur le PDA classique susvisé (avec uniquement une ionisation) et sur le PDA de l'invention susvisé (neutralisation suivie de l'ionisation) pour donner une moyenne $T_{B\_MOY(PDA)}$ des instants d'amorçage $T_{B\_PDA}$.

Le gain temporel $\Delta T$ du PDA (classique ou conforme à l'invention) définit l'avance à l'amorçage et est la différence des deux moyennes des instants d'amorçage de ses deux paratonnerres donné par la formule suivante :

$$\Delta\mathrm{T} = T_{B\_MOY(PTS)} - T_{B\_MOY(PDA)} \qquad \text{(EQ. 1)}$$

Ecart type

Cette avance à l'amorçage $\Delta T$ est plafonnée normativement à 60μs. Les performances en rayon de protection offertes par un PDA sont donc bridées par la norme et il est donc inutile de vouloir augmenter ce gain $\Delta T$ au delà.

L'amélioration objective de la performance ne peut donc plus passer par une augmentation de $\Delta T$ une fois que celui-ci atteint sa valeur maximale normative.

La norme PDA NFC 17102:2011 impose également une performance minimale en écart-type du PDA. En effet, l'écart type du PDA doit être meilleur que celui d'un paratonnerre à pointe simple (PTS), toute considération à propos de la valeur de $\Delta T$ écartée. La condition est la suivante : $\sigma_{PDA} < 0,8$ x $\sigma_{PTS}$.

On a vu précédemment que chaque amorçage plateau/pointe n'arrive pas au même instant, ce qui induit une dispersion (et donc un écart type) des valeurs d'instants d'amorçage $T_B$ mesurées.

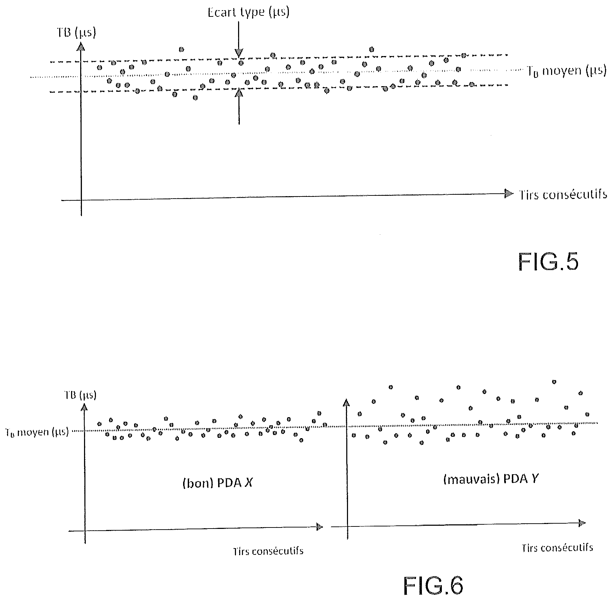

On a représenté sur la figure 5, un exemple de nuage de points des instants d'amorçage $T_B$ mesurés consécutivement pour un même paratonnerre durant un même test en laboratoire.

Pour une même moyenne des instants d'amorçage $T_B$ donnée (et donc un même $\Delta T$), un paratonnerre est plus performant qu'un autre si son écart-type des instants d'amorçage $T_B$ est plus faible. Autrement dit, en référence à la figure 6, pour un même $\Delta T$, un PDA $X$ ayant un petit écart-type $\sigma$ (faible dispersion des instants d'amorçage $T_B$) sera plus performant qu'un PDA $Y$ possédant un écart type plus grand (donc une large dispersion des instants d'amorçage $T_B$).

Des essais en laboratoire ont été effectués pour caractériser l'avance à l'amorçage $\Delta T$ et l'écart type des instants d'amorçage $T_B$ du PDA classique susvisé (uniquement avec ionisation) et du PDA de l'invention susvisé (avec une neutralisation de la charge d'espace suivie d'une ionisation).

Pour ces essais, la configuration utilisée (Figure 4), était conforme à la norme. Le plateau P était soumis à un très grand potentiel électrique normativement prévu pour simuler un champ électrique d'orage compris entre -20 kV/m et -25 kV/m. L'impulsion très haute tension sur le plateau P, pour simuler l'arrivée d'un traceur descendant, était une impulsion THT inférieure à 1,6MV, ayant un temps de montée compris entre 100 $\mu$s et 1000$\mu$s avec une forme de type 250/2500. Le retard R était compris entre quelques nanosecondes et quelques dizaines de microsecondes. La tension de neutralisation appliquée aux électrodes de neutralisation 2 était une impulsion haute tension (HT) d'une amplitude maximale donnée de manière à éviter tout arc électrique entre l'électrode collectrice 11 et les électrodes de neutralisation 2. Les tensions d'ionisation appliquées aux électrodes d'étincelage 13 étaient identiques pour les deux dispositifs testés. Pour le PDA classique (sans neutralisation), les tensions d'ionisation étaient appliquées sans retard R, le module électronique d'ionisation 33 étant commandé par le premier signal de commande S1 (et non par un deuxième signal de commande retardé S2).

Ces essais ont montré que l'avance à l'amorçage $\Delta T$ du PDA classique (uniquement avec ionisation) était sensiblement identique à l'avance à l'amorçage $\Delta T$ du PDA de l'invention, mais en revanche que l'écart type des instants d'amorçage $T_B$ du PDA de l'invention était nettement plus faible (dispersion diminuée de 25%) que l'écart type des instants d'amorçage $T_B$ du PDA classique. Le dispositif de protection de l'invention est donc nettement plus performant.

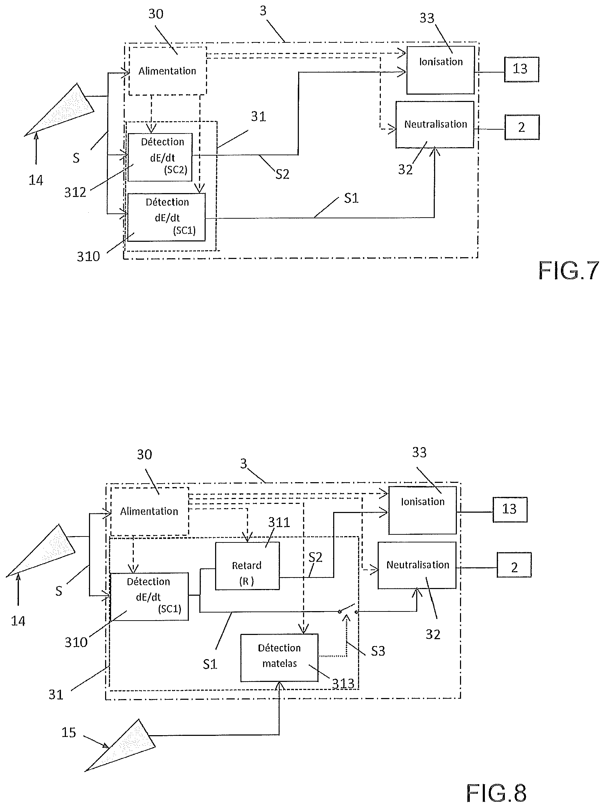

Autres variantes des figures 7 à 12

L'invention n'est pas limitée à l'exemple de synoptique du circuit électronique de commande 3 de la figure 3. A titre d'exemples non limitatifs et non exhaustifs de l'invention, on a représenté respectivement sur les figures 7 à 12 d'autres exemples de circuit électronique de commande qui vont à présent être succinctement décrits.

Figure 7

Dans la variante de la figure 7, le circuit électronique de commande comporte un deuxième module de détection de seuil 312, qui remplace le module retard 311 de la variante de la figure 3, et qui génère le deuxième signal de commande S2 pour la commande du module d'ionisation 33, lorsque la variation de champ électrique (dE/dt) devient supérieure à un deuxième seuil critique Sc2, qui est supérieur au premier seuil critique Sc1 du module de détection 310.

En fonctionnement, la variation (dE/dt) de champ électrique ambiant augmente au fur et à mesure que le traceur descendant se rapproche. Par conséquent, le seuil critique Sc2 étant supérieur au premier seuil critique Sc1, le déclenchement du module de neutralisation 32 intervient dans un premier temps, et le déclenchement du module d'ionisation 33 intervient ensuite dans un deuxième temps de manière comparable au fonctionnement de la variante de la figure 3.

Figures 8 et 9

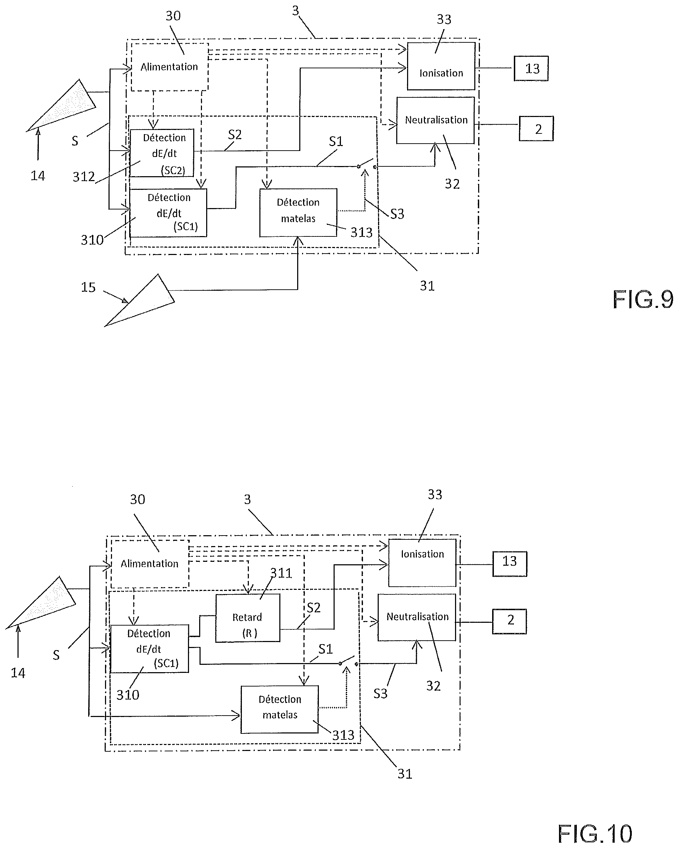

Dans les variantes des figures 8 et 9, le circuit électronique de commande 3 comporte, comparativement respectivement aux variantes des figures 3 et 7, un capteur 15 permettant de détecter la présence d'une charge d'espace au voisinage de l'extrémité libre 11a de l'électrode collectrice 11, et un module électronique de détection 313 supplémentaire, qui délivre un signal d'autorisation S3 en fonction du signal de mesure délivré par le capteur 15. Ce signal d'autorisation S3 permet d'autoriser ou non la commande du module de neutralisation 32 par le premier signal de commande S1.

Le capteur 15 est par exemple un capteur mesurant l'intensité du courant couronne traversant l'électrode collectrice 11, tel que par exemple un tore de Rogowski ou de Pearson. Le capteur 15 peut également être une électrode mesurant le champ électrique ambiant au voisinage du paratonnerre.

Lorsque le capteur 15 détecte la présence d'une charge d'espace trop importante, le module électronique de détection 313 autorise, au signal moyen du signal d'autorisation S3, le déclenchement du module de neutralisation 32 par le premier signal de commande S1. Le dispositif de protection contre la foudre fonctionne alors tel que précédemment décrit avec une première phase de neutralisation des charges d'espace suivie immédiatement d'une deuxième phase d'ionisation.

A l'inverse, tant que le capteur 15 ne détecte pas la présence d'une charge d'espace ou détecte une charge d'espace trop faible, le module électronique de détection 313 empêche, au signal moyen du signal d'autorisation S3, la commande du module de neutralisation 32 par le premier signal de commande S1. Le dispositif de protection contre la foudre fonctionne ainsi de la même manière qu'un PDA classique en mettant en oeuvre uniquement une ionisation pour le déclenchement d'un traceur ascendant.

Figures 10 et 11

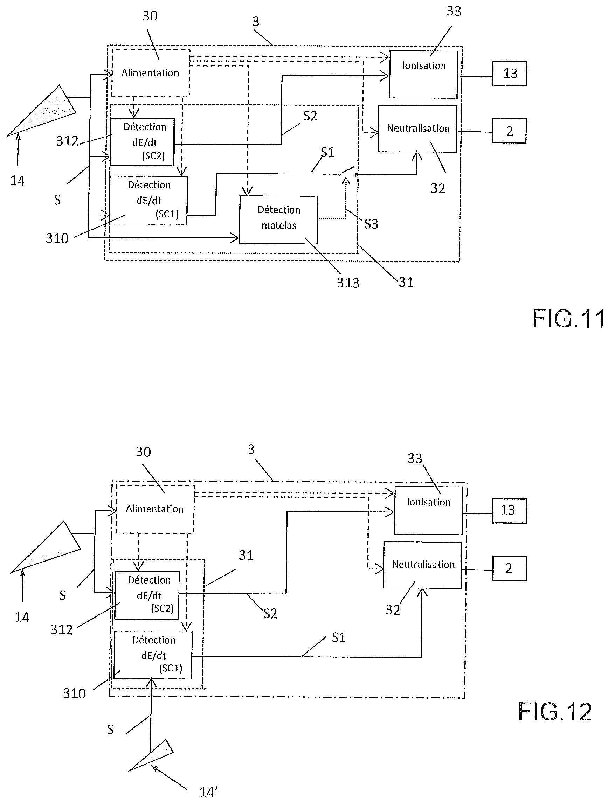

Les variantes des figures 10 et 11 se différencient respectivement des variantes des figures 8 et 9, par l'utilisation d'au moins une des électrodes 14 de prise de potentiel pour détecter la présence d'une charge d'espace à proximité de l'extrémité libre 11a de l'électrode collectrice 11.

Figure 12

Le dispositif de la figure 12 se différencie du dispositif de la figure 7 par la mise en oeuvre d'une électrode 14' dédiée à la détection de la variation de champs dE/dt et à la commande du module électronique de neutralisation 32 au moyen du signal de commande S1, en fonction du seuil critique SC1. Cette électrode 14' peut être identique à l'électrode 14 ou peut présenter une géométrie et/ou des dimensions différentes de celles de l'électrode 14.
Les variantes des figures 9 et 11 peuvent également être modifiées de la même manière, c'est-à-dire en ajoutant une électrode 14' dédiée à la détection de la variation de champs dE/dt et à la commande du module électronique de neutralisation 32 au moyen du signal de commande S1, en fonction du seuil critique SC1.
Egalement sur toutes les variantes des figures 3 et 7 à 12, l'électrode 14 peut être dédiée uniquement à la détection du champ électrique (E), et notamment à la détection de la variation (dE/dt) du champ électrique, une ou plusieurs autres électrodes de prise de potentiel pouvant être utilisées uniquement pour l'auto-alimentation électrique du dispositif.
L'invention n'est pas limitée aux variantes particulières de réalisation qui ont été décrites en référence aux figures annexées. De manière non exhaustive et non limitative de l'invention, les modifications suivantes peuvent par exemple être apportées à ces variantes. Le dispositif de protection contre la foudre n'est pas nécessairement autoalimenté électriquement à partir du champ électrique ambiant, mais il est possible de prévoir une alimentation électrique autonome, par exemple de type batterie électrique, source d'énergie renouvelable, de type panneaux photovoltaïques ou éoliennes.
D'une manière générale, les électrodes d'étincelage 13 peuvent être remplacées par tout moyen ou dispositif d'amorçage pouvant être commandé et permettant de favoriser le déclenchement d'un traceur ascendant (par exemple rayonnement électromagnétique). Plus particulièrement, les électrodes d'étincelage 13 peuvent être remplacées par tout moyen ou dispositif d'ionisation permettant une ionisation de l'air ambiant à proximité de l'extrémité libre 11a de l'électrode collectrice 11, afin de favoriser le déclenchement d'un traceur ascendant.
Les électrodes 2 du dispositif peuvent être remplacées par tout moyen équivalent permettant une neutralisation de tout ou partie de la charge d'espace à proximité de l'extrémité libre 11a de l'électrode collectrice 11. L'invention n'est pas limitée à la mise en oeuvre d'électrodes de neutralisation se terminant par des sphères, mais peut également être mise en oeuvre au moyen d'une électrode de neutralisation entourant l'électrode collectrice 11, telle que par exemple une électrode de neutralisation 2 se terminant par un tore ou un anneau, et entourant l'électrode collectrice 11 à proximité ou au niveau de son extrémité libre, tel qu'illustré sur la variante de la figure 2, ou par exemple une électrode de neutralisation en forme de cylindre entourant l'électrode collectrice 11 à proximité ou au niveau de son extrémité libre. Quelle que soit le type d'électrodes de neutralisation, on veillera à ce que la ou les électrodes de neutralisation présentent une forme et un positionnement par rapport à l'électrode collectrice, qui évitent les risques de formation d'arc électriques entre l'électrode collectrice 11 et la ou les électrodes de neutralisation, et qui évitent la création d'un effet couronne sur la ou les électrodes de neutralisation.
Dans une autre variante, il est possible également d'utiliser l'électrode collectrice comme électrode de neutralisation. Dans ce cas la tension de neutralisation est appliquée sur l'électrode collectrice 11.

**Revendications**

1. Dispositif de protection contre la foudre comportant un paratonnerre (1), qui comprend une électrode collectrice (11) avec au moins une extrémité libre (11a), configurée pour capter un courant de foudre et pour le décharger dans la terre, et des moyens d'amorçage (13 ; 33) permettant de favoriser la formation d'un traceur ascendant au voisinage de l'extrémité libre (11a) de l'électrode collectrice (11), **caractérisé en ce qu'**il comporte en outre des moyens de neutralisation (2 ; 32), qui permettent de réduire la charge d'espace qui s'est formée au voisinage de l'extrémité libre (11a) de l'électrode collectrice (11) avant l'émission d'un traceur ascendant, et des moyens électroniques de commande (3) qui permettent de commander automatiquement et séquentiellement dans un premier temps lesdits moyens de neutralisation (2 ; 32), et dans un deuxième temps lesdits moyens d'amorçage (13 ; 33) du paratonnerre.

2. Dispositif selon la revendication 1, dans lequel les moyens de neutralisation comportent au moins une électrode de neutralisation (2) qui est positionnée à proximité de l'extrémité libre (11a) de l'électrode collectrice (11), et/ou dans lequel les moyens de neutralisation permettent d'appliquer temporairement sur l'électrode collectrice (11), ou le cas échéant sur chaque électrode de neutralisation (2), une tension de neutralisation de polarité identique ou opposée à la polarité du champ électrique ambiant, de préférence une impulsion de tension.

3. Dispositif selon l'une quelconque des revendications précédentes, dans lequel les moyens d'amorçage (13 ; 33) permettent l'ionisation de l'air à proximité de l'extrémité libre (11a) de l'électrode collectrice (11), de préférence permettent l'ionisation par des décharges haute tension de l'air à proximité de l'extrémité libre (11a) de l'électrode collectrice (11), les moyens d'amorçage comportant de préférence au moins une électrode d'étincelage (13) positionnée à proximité de l'extrémité libre (11a) de l'électrode collectrice (11), et plus préférentiellement encore permettant d'appliquer temporairement sur chaque électrode d'étincelage (13) une tension d'ionisation.

4. Dispositif selon l'une quelconque des revendications précédentes, comportant des moyens (14) de détection du champ électrique ambiant au voisinage du paratonnerre, et les moyens de commande (3) sont conçus pour commander automatiquement lesdits moyens de neutralisation (2 ; 32), et lesdits moyens d'amorçage (13 ; 33) en fonction du champ électrique ambiant détecté par les moyens de détection (14), de préférence en fonction de la valeur (E) du champ électrique ambiant détecté par les moyens de détection (14) et/ou de la variation (dE/dt) du champ électrique ambiant détecté par les moyens de détection (14).

5. Dispositif selon l'une quelconque des revendications précédentes, dans lequel les moyens électroniques de commande (3) sont conçus pour commander automatiquement lesdits moyens de neutralisation (2 32), au moyen d'un premier signal de commande (S1) et pour commander automatiquement lesdits moyens d'amorçage (13 ; 33) au moyen d'un deuxième signal de commande (S2), qui est retardé par rapport premier signal de commande (S1) d'une durée (R) prédéfinie et de préférence paramétrable, et/ou de préférence inférieure à 1 ms.

6. Dispositif selon l'une quelconque des revendications précédentes, comportant des moyens (15) de détection d'une charge d'espace à proximité de l'extrémité libre (11a) de l'électrode collectrice (11).

7. Dispositif selon la revendication 6, dans lequel les moyens de détection d'une charge d'espace à proximité de l'extrémité libre (11a) de l'électrode collectrice (11) comportent un capteur (15) détectant le courant couronne traversant l'électrode collectrice (11) ou un capteur mesurant le champ électrique ambiant.

8. Dispositif selon l'une quelconque des revendications 6 ou 7, dans lequel les moyens électroniques de commande (3) comportent des moyens d'autorisation (313) autorisant ou non la commande des moyens de neutralisation (2) par les moyens électroniques de commande (3), à partir d'une détection d'une charge d'espace à proximité de l'extrémité libre (11a) de l'électrode collectrice (11).

9. Dispositif selon l'une quelconque des revendications précédentes, dans lequel la tension de neutralisation permet d'augmenter l'intensité du courant couronne traversant l'électrode collectrice (11).

10. Dispositif selon l'une quelconque des revendications précédentes, dans lequel les moyens électroniques de commande (3) permettent de commander automatiquement et séquentiellement dans un premier temps lesdits moyens de neutralisation (2 ; 32), et dans un deuxième temps lesdits moyens d'amorçage (13 ; 33) du paratonnerre, de telle sorte que l'écart-type des instants d'amorçage ($T_B$) du dispositif est inférieur à l'écart-type des instants d'amorçage ($T_B$) du dispositif sans mise en oeuvre des moyens de neutralisation.

11. Procédé de protection contre la foudre au moyen d'un dispositif comportant un paratonnerre (1), qui comprend une électrode collectrice (11) avec au moins une extrémité libre (11a), configurée pour capter un courant de foudre et pour le décharger dans la terre, **caractérisé en ce que**, à l'approche d'un traceur descendant, dans une première phase de neutralisation, on applique temporairement, sur l'électrode collectrice (11) ou sur au moins une électrode de neutralisation (2) positionnée à proximité de l'extrémité libre (11a) de l'électrode collectrice (11), une tension de neutralisation, et dans une deuxième phase d'amorçage d'un traceur ascendant mise en oeuvre après la première phase de neutralisation, et de préférence immédiatement après la première phase de neutralisation, on provoque une ionisation de l'air à proximité de l'extrémité libre (11a) de l'électrode collectrice (11).

12. Procédé selon la revendication 11, dans lequel la polarité de la tension de neutralisation est opposée ou identique à la polarité de la charge d'espace qui s'est formée dans l'air à proximité de l'extrémité libre (11a) de l'électrode collectrice (11), et/ou dans lequel la tension de neutralisation est appliquée sous la forme d'une impulsion de tension.

**13.** Procédé selon l'une quelconque des revendications 11 ou 12, dans lequel l'ionisation de l'air à proximité de l'extrémité libre (11a) de l'électrode collectrice (11) qui est provoquée au cours de la deuxième phase d'amorçage est réalisée au moyen de décharges haute tension, de préférence au cours de la deuxième phase d'amorçage en appliquant temporairement une tension d'ionisation sur au moins une électrode d'étincelage (13) positionnée à proximité de l'extrémité libre (11a) de l'électrode collectrice (11).

**14.** Procédé selon l'une quelconque des revendications 11 à 13, dans lequel on détecte le champ électrique ambiant au voisinage du paratonnerre, et on démarre la première phase de neutralisation en fonction de cette détection du champ électrique ambiant.

**15.** Procédé selon l'une quelconque des revendications 11 à 14, dans lequel la tension de neutralisation permet de réduire la charge d'espace qui s'est formée dans l'air à proximité de l'extrémité libre (11a) de l'électrode collectrice (11), et/ou permet d'augmenter l'intensité du courant couronne traversant l'électrode collectrice (11).

**16.** Procédé selon l'une quelconque des revendications 11 à 15, dans lequel la mise en oeuvre successivement de ladite première phase de neutralisation et de ladite deuxième phase d'amorçage permet de diminuer l'écart-type des instants d'amorçage ($T_B$) comparativement à un procédé mettant en oeuvre uniquement ladite deuxième phase d'amorçage.

**Patentansprüche**

**1.** Blitzschutzvorrichtung, umfassend einen Blitzableiter (1), der eine Fangelelektrode (11) mit mindestens einem freien Ende (11a) umfasst, der dazu ausgelegt ist, einen Blitzstrom aufzunehmen und in den Boden zu entladen, und Zündungseinrichtungen (13; 33) zur Förderung der Bildung eines aufsteigenden Leitblitzes in der Nähe des freien Endes (11a) der Fangelelektrode (11),
**dadurch gekennzeichnet, dass** sie ferner Neutralisationsmittel (2; 32) umfasst, welche die Reduktion der Raumladung ermöglichen, welche sich in der Nähe des freien Endes (11a) der Fangelelektrode (11) vor der Bildung eines aufsteigenden Leitblitzes ausbildet, und elektronische Steuermittel (3), welche eine automatische und aufeinanderfolgende Steuerung erstens der Neutralisationsmittel (2; 32) und zweitens der Zündungseinrichtung (13; 33) des Blitzableiters ermöglichen.

**2.** Vorrichtung nach Anspruch 1, wobei die Neutralisationsmittel zumindest eine Neutralisationselektrode (2) umfassen, die in der Nähe des freien Endes (11a) der Fangelelektrode (11) angeordnet ist, und/oder wobei die Neutralisationsmittel es ermöglichen, temporär eine Neutralisationsspannung mit dem elektrischen Feld der Umgebung gleicher bzw. gegebenenfalls entgegengesetzter Polarität an die Fangelelektrode (11) und/oder an jede der Neutralisationselektroden (2) anzulegen, vorzugsweise einen Spannungsimpuls.

**3.** Vorrichtung nach einem der vorhergehenden Ansprüche, wobei die Zündungseinrichtungen (13; 33) Luftionisation in der Nähe des freien Endes (11a) der Fangelelektrode (11) ermöglichen, und vorzugsweise eine Ionisation durch Hochspannungsentladungen der Luft in der Nähe des freien Endes (11a) der Fangelelektrode (11) erlauben, wobei die Zündungseinrichtungen vorzugsweise wenigstens eine Funkenbildungselektrode (13) umfassen, die in der Nähe des freien Endes (11a) der Fangelelektrode (11) angeordnet ist, und es besonders bevorzugt ermöglichen, an jede der Funkenbildungselektroden (13) eine Ionisationsspannung anzulegen.

**4.** Vorrichtung nach einem der vorhergehenden Ansprüche, mit einer Einrichtung (14) zum Detektieren des elektrischen Felds der Umgebung in der Nähe des Blitzableiters, wobei die Steuermittel (3) dazu ausgelegt sind, das Neutralisationsmittel (2; 32) und die Zündungseinrichtung (13; 33) in Abhängigkeit von dem durch die Erfassungseinrichtung (14) erfassten elektrischen Felds der Umgebung der automatisch zu steuern, vorzugsweise abhängig von einem Wert (E) des von der Einrichtung (14) zum Detektieren erfassten elektrischen Felds der Umgebung und/oder der Veränderung (dE/dt) des von der Einrichtung (14) zum Detektieren erfassten elektrischen Felds der Umgebung.

**5.** Vorrichtung nach einem der vorhergehenden Ansprüche, wobei die elektronischen Steuermittel (3) dazu ausgelegt sind, die Neutralisationsmittel (2; 32) automatisch mittels eines ersten Steuersignals (S1) zu steuern und automatisch die Zündungseinrichtung (13; 33) mittels eines zweiten Steuersignals (S2) zu steuern, welches gegenüber dem ersten Steuersignal (S1) um eine vorgegebene Dauer (R) verzögert ist, die vorzugsweise einstellbar ist und/oder weniger als 1 ms beträgt.

**6.** Vorrichtung nach einem der vorhergehenden Ansprüche, umfassend Mittel (15) zum detektieren einer Raumladung in der Nähe des freien Endes (11a) der Fangelektrode (11).

**7.** Vorrichtung nach einem Anspruch 6, wobei das Mittel zum detektieren der Raumladung in der Nähe des freien Endes (11a) der Fangelektrode (11) einen Sensor (15) umfasst, welcher den die Fangelektrode (11) durchfließenden Koronastrom detektiert, oder einen Sensor, welcher das elektrische Feld der Umgebung misst.

**8.** Vorrichtung nach einem der Ansprüche 6 oder 7, wobei die elektronischen Steuermittel (3) Autorisationsmittel (313) umfassen, welche die Steuersignale der elektronischen Steuermittel (3) für die Neutralisationsmittel (2) abhängig von der Detektion einer Raumladung in der Nähe des freien Endes (11a) der Fangelektrode (11) autorisieren oder nicht.

**9.** Vorrichtung nach einem der vorhergehenden Ansprüche, wobei die Neutralisationsspannung es ermöglicht, die Intensität des die Fangelektrode (11) durchfließenden Koronastroms zu erhöhen.

**10.** Vorrichtung nach einem der vorhergehenden Ansprüche, wobei die elektronischen Steuermittel (3) es ermöglichen, automatisch und aufeinanderfolgend als erstes die Neutralisationsmittel (2, 32) zu steuern und als zweites die Zündungsmittel (13; 33) des Blitzableiters zu steuern, so dass der typische Abstand der Zündmomente ($T_B$) der Vorrichtung geringer als der typische Abstand der Zündmomente ($T_B$) der Vorrichtung ohne Verwendung der Neutralisationsmittel ist.

**11.** Verfahren zum Schützen vor Blitzen mittels einer Blitzschutzvorrichtung, die einen Blitzableiter (1) umfasst, der eine Fangelelektrode (11) mit mindestens einem freien Ende (11a) umfasst, der dazu ausgelegt ist, einen Blitzstrom aufzunehmen und in den Boden zu entladen, **dadurch gekennzeichnet, dass** beim Näherkommen eines absteigenden Leitblitzes in einer ersten Neutralisationsphase temporär an die Fangelektrode (11) oder an wenigstens eine Neutralisationselektrode (2), die in der Nähe eines freien Endes (11a) der Fangelektrode (11) angeordnet ist, eine Neutralisationsspannung angelegt wird, und in einer zweiten Zündungsphase eines aufsteigenden Leitblitzes, die nach der ersten Neutralisationsphase durchgeführt wird, und vorzugsweise unmittelbar nach der ersten Neutralisationsphase, eine Ionisation der Luft in der Nähe des freien Endes (11a) der Fangelektrode (11) erzeugt wird.

**12.** Verfahren nach Anspruch 11, wobei die Polarität der Neutralisationsspannung gleich oder entgegengesetzt der Polarität der Raumladung, welche sich in der Nähe des freien Endes (11a) der Fangelektrode (11) ausbildet, und/oder wobei die Neutralisationsspannung in der Form eines Spannungspulses angelegt wird.

**13.** Verfahren nach einem der Ansprüche 11 oder 12, wobei die Ionisation der Luft in der Nähe des freien Endes (11a) der Fangelektrode (11), welche im Verlauf der zweiten Zündungsphase erzeugt wird, mithilfe von Hochspannungsentladungen erzeugt wird, vorzugsweise im Verlauf der zweiten Zündungsphase durch temporäres Anlegen einer Ionisationsspannung an wenigstens einer Funkenbildungselektrode (13), die in der Nähe des freien Endes (11a) der Fangelektrode (11) angeordnet ist.

**14.** Verfahren nach einem der Ansprüche 11 bis 13, wobei das elektrische Feld der Umgebung in der Nähe des Blitzableiters detektiert wird und die erste Neutralisationsphase abhängig von diesem detektierten elektrischen Feld der Umgebung gestartet wird.

**15.** Verfahren nach einem der Ansprüche 11 bis 14, wobei die Neutralisationsspannung es ermöglicht, die Raumladung, welche sich in der Luft in der Nähe des freien Endes des freien Endes (11a) der Fangelektrode (11) ausbildet, zu reduzieren und/oder es ermöglicht, die Intensität des die Fangelektrode (11) durchfließenden Koronastroms zu erhöhen.

**16.** Verfahren nach einem der Ansprüche 11 bis 15, wobei das aufeinanderfolgende Ausführen der ersten Neutralisationsphase und der zweiten Zündungsphase es ermöglicht, den typischen Abstand der Zündmomente ($T_B$) im Vergleich zu einem Verfahren, welches nur die zweite Zündungsphase verwendet, zu verringern.

**Claims**

**1.** Lightning protection device including a lightning rod (1), comprising a collector electrode (11) with at least one free end (11a), configured to pick up a lightning current and to discharge it into the ground, and priming means (13; 33) making it possible to promote the formation of an ascending tracer in the vicinity of the free end (11a) of the collector electrode (11), **characterized in that** it additionally includes neutralization means (2; 32), which means make it possible to decrease the space charge that has formed in the vicinity of the free end (11a) of the collector electrode (11) before the emission of an ascending tracer, and electronic control means (3) that make it possible to automatically and sequentially control, in a first phase, said neutralization means (2; 32), and, in a second phase, said priming means (13; 33) of the lightning rod.

2. Device according to Claim 1, in which the neutralization means include at least one neutralization electrode (2) that is positioned in proximity to the free end (11a) of the collector electrode (11), and/or in which the neutralization means make it possible to temporarily apply, to the collector electrode (11) or, if applicable, to each neutralization electrode (2), a neutralization voltage, the polarity of which is identical or opposite to the polarity of the ambient electric field, preferably a voltage pulse.

3. Device according to either one of the preceding claims, in which the priming means (13; 33) make it possible to ionize the air in proximity to the free end (11a) of the collector electrode (11), preferably make it possible to ionize the air in proximity to the free end (11a) of the collector electrode (11) by means of high-voltage discharges, the priming means preferably including at least one sparking electrode (13) positioned in proximity to the free end (11a) of the collector electrode (11), and even more preferably making it possible to temporarily apply, to each sparking electrode (13), an ionization voltage.

4. Device according to any one of the preceding claims, including means (14) for detecting the ambient electric field in the vicinity of the lightning rod, and the control means (3) are designed to automatically control said neutralization means (2; 32) and said priming means (13; 33) according to the ambient electric field detected by the detection means (14), preferably according to the value (E) of the ambient electric field detected by the detection means (14) and/or according to the variation (dE/dt) in the ambient electric field detected by the detection means (14).

5. Device according to any one of the preceding claims, in which the electronic control means (3) are designed to automatically control said neutralization means (2, 32), by means of a first control signal (S1) and to automatically control said priming means (13; 33) by means of a second control signal (S2), which is delayed with respect to the first control signal (S1) by a duration (R) that is predefined and preferably parametrizable, and/or preferably shorter than 1 ms.

6. Device according to any one of the preceding claims, including means (15) for detecting a space charge in proximity to the free end (11a) of the collector electrode (11).

7. Device according to Claim 6, in which the means for detecting a space charge in proximity to the free end (11a) of the collector electrode (11) include a sensor (15) detecting the corona current flowing through the collector electrode (11) or a sensor measuring the ambient electric field.

8. Device according to either of Claims 6 and 7, in which the electronic control means (3) include authorization means (313) that either allow or do not allow the neutralization means (2) to be controlled by the electronic control means (3), on the basis of a detection of a space charge in proximity to the free end (11a) of the collector electrode (11).

9. Device according to any one of the preceding claims, in which the neutralization voltage makes it possible to increase the intensity of the corona current flowing through the collector electrode (11).

10. Device according to any one of the preceding claims, in which the electronic control means (3) make it possible to automatically and sequentially control, in a first phase, said neutralization means (2; 32), and, in a second phase, said priming means (13; 33) of the lightning rod, such that the standard deviation of the priming times ($T_B$) of the device is smaller than the standard deviation of the priming times ($T_B$) of the device without the implementation of the neutralization means.

11. Lightning protection method by means of a device including a lightning rod (1), comprising a collector electrode (11) with at least one free end (11a), configured to pick up a lightning current and to discharge it into the ground, **characterized in that**, as a descending tracer approaches, in a first neutralization phase, a neutralization voltage is temporarily applied to the collector electrode (11), or to at least one neutralization electrode (2) positioned in proximity to the free end (11a) of the collector electrode (11), and, in a second phase of priming an ascending tracer implemented after the first neutralization phase, and preferably immediately after the first neutralization phase, the air in proximity to the free end (11a) of the collector electrode (11) is ionized.

12. Method according to Claim 11, in which the polarity of the neutralization voltage is opposite or identical to the polarity of the space charge that has formed in the air in proximity to the free end (11a) of the collector electrode (11), and/or in which the neutralization voltage is applied in the form of a voltage pulse.

13. Method according to either of Claims 11 and 12, in which the ionization of the air in proximity to the free end (11a) of the collector electrode (11), which occurs in the second priming phase and is achieved by means of high-voltage discharges, preferably in the second priming phase by temporarily applying an ionization voltage to at least one sparking electrode (13) positioned in proximity to the free end (11a) of the collector electrode (11).

14. Method according to any one of Claims 11 to 13, in which the ambient electric field in the vicinity of the lightning rod is detected, and the first neutralization phase is initiated according to this detection of the ambient electric field.

15. Method according to any one of Claims 11 to 14, in which the neutralization voltage makes it possible to decrease the space charge that has formed in the air in proximity to the free end (11a) of the collector electrode (11), and/or makes it possible to increase the intensity of the corona current flowing through the collector electrode (11).

16. Method according to any one of Claims 11 to 15, in which the successive implementation of said first neutralization phase and of said second priming phase makes it possible to decrease the standard deviation of the priming times ($T_B$) in comparison with a method implementing only said second priming phase.

FIG.1

FIG.2

FIG.3

FIG.4

FIG.5

FIG.6

FIG.7

FIG.8

FIG.9

FIG.10

EP 3 127 203 B1

FIG.11

FIG.12

24

**RÉFÉRENCES CITÉES DANS LA DESCRIPTION**

**Documents brevets cités dans la description**

- FR 2543370
- FR 2590737
- FR 2973598
- FR 2943487
- US 2009000802 A
- FR 2817085